# FASCICULE DE BREVET EUROPEEN

(11) **EP 2 321 771 B1**
(45) Date de publication et mention de la délivrance du brevet: **26.05.2021**
(21) Numéro de dépôt: 09740457.8
(22) Date de dépôt: 11.08.2009
(51) Int. Cl.: G06K 19/073, G06K 19/077, G06K 19/02, A45C 1/00

(54) **E-DOCUMENT COMPORTANT UN ELEMENT DE PERTURBATION ELECTROMAGNETIQUE**
E-DOKUMENT MIT EINEM ELEKTROMAGNETISCHEN STÖRUNGSELEMENT
E-DOCUMENT COMPRISING ELECTROMAGNETIC DISTURBANCE ELEMENT

(30) Priorité: 12.08.2008 FR 0855538
(43) Date de publication de la demande: 18.05.2011
(73) Titulaire: HID Global CID SAS, 92150 Suresnes (FR)
(72) Inventeur: RANCIEN, Sandrine, F-38140 La Murette (FR); VICENTINI Frédéric, F-94370 Sucy en Brie (FR); LE LOARER, Thibaut, F-38260 Pommier de Beaurepaire (FR); REMY, Alban, F-77160 Provins (FR)
(74) Mandataire: Andrieux, Benoît
(86) Numéro de dépôt international: PCT/FR2009/051583
(87) Numéro de publication internationale: WO 2010/018346

(56) Documents cités:
- FR-A- 2 863 748
- FR-A- 2 895 550
- FR-A1- 2 877 462
- FR-A1- 2 900 485
- US-A1- 2008 186 186
- US-A1- 2008 186 186

## Description

La présente invention a pour objet une structure laminée à volets pour un E-document à volets ainsi qu'un tel E-document.

On appelle E-document (ou document électronique), un document comportant des informations destinées à être utilisées sous forme électronique, sans qu'il soit nécessaire qu'elles soient imprimées sur ledit document.

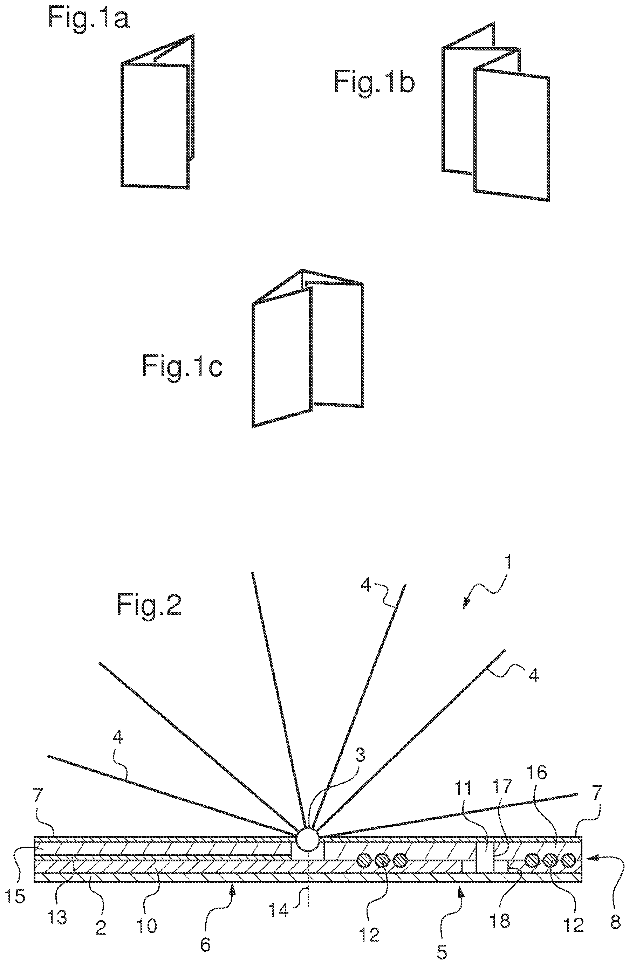

Par document à volets, on entend un document présentant ou non une fonction d'identification d'une personne ou d'un objet et qui comprend au moins une zone de pliage, tel qu'un livret de passeport, un document à trois volets pliable en "tryptique", tel que représenté à la figure 1a, comme une carte grise ou un permis de conduire français ou un document pliable en "accordéon", tel que représenté à la figure 1b ou en "portefeuille" à plusieurs volets, tel que représenté à la figure le.

Il existe des moyens de protéger des E-documents relatifs à l'identification d'une personne et comportant un dispositif électronique permettant d'échanger sans contact des données par voie électromagnétique, notamment du type dispositif RFID (*Radio Frequency Identification Device*), contre une tentative de lecture et/ou écriture des données qui pourrait se faire à l'insu du porteur de l'E-document.

Ces moyens reposent notamment sur l'insertion dans l'E-document de dispositifs d'atténuation ou de perturbation du champ électromagnétique émis par les lecteurs qui pourraient être utilisés pour récupérer ou modifier les données contenues dans les microcircuits intégrés des dispositifs électroniques sans contact, à l'insu du porteur de l'E-document. Ces dispositifs sont appelés, par exemple, écrans électromagnétiques ou éléments de masquage.

On connaît par la demande de brevet JP 11-348471 un livret comportant un module électronique porté par l'un des volets de la couverture ou l'un des feuillets du livret. Le volet avant de la couverture du livret peut définir un écran électromagnétique et le module électronique est porté par le volet arrière. La couverture ainsi réalisée présente des volets avant et arrière dissymétriques. Dans une variante, l'écran électromagnétique est formé à la fois sur les volets avant et arrière du livret et le module électronique est porté par un feuillet du livret.

On connaît par les demandes de brevet FR 2 863 748 et FR 2 879 789 un passeport comportant, sur un premier volet de la couverture, un transpondeur formé d'un module électronique connecté à une antenne. Un deuxième volet de la couverture ou l'un des feuillets du livret est pourvu d'un élément de masquage passif de l'antenne du transpondeur. Le passeport peut présenter une surépaisseur due à la présence de l'élément de masquage.

On connaît par la demande internationale WO 2006/005984 un passeport comportant dans un volet de sa couverture un dispositif électronique permettant d'échanger des données sans contact et, dans l'autre volet de sa couverture ou sur l'une des pages un écran électromagnétique, sous forme d'un foil, d(une grille métallique ou d'une encre magnétique.

On connaît encore par les demandes FR 2 888 367 et FR 2 888 368 un passeport comportant un dispositif électronique sans contact et un circuit formant résonateur, se présentant par exemple sous la forme de spires permettant d'obtenir la fréquence de résonance désirée, les spires étant réalisées sur une couche intermédiaire d'une couverture. La couche intermédiaire est laminée avec d'autres couches pour former la couverture et recevoir un dispositif électronique permettant d'échanger des données sans contact.

On connaît également par la demande internationale WO 2005/104024 un livret comportant deux parties, une partie comportant un transpondeur intégré dans cette partie et l'autre partie portant un élément de blindage occupant une zone dont la surface correspond au moins à celle occupée par le transpondeur sur la première partie.

On connaît encore par la demande internationale WO 2005/119586 un passeport comportant dans un premier volet de sa couverture un transpondeur et dans un deuxième volet un élément de blindage.

On connaît également le document FR2900485A1, qui divulgue (voir figures 7 à 8 et les passages correspondants de la description) :
une structure laminée pour E-document, comportant une première couche de support définissant au moins deux volets plans de même épaisseur reliés par au moins une ligne de pliage,
- le premier volet portant une antenne et un dispositif à microcircuit permettant d'échanger des données sans contact,
   a) la structure comportant au moins une couche d'un adhésif activable à chaud ou sensible à la pression permettant d'accueillir dans son épaisseur l'antenne et au moins partiellement le dispositif à microcircuit, b) les volets présentant au moins une couche polymère ayant une épaisseur différente pour chacun des volets.

Les documents électroniques proposés jusqu'ici présentent un inconvénient en ce que les dispositifs d'atténuation ou de perturbation du champ électromagnétique émis par les lecteurs pour récupérer ou modifier les données contenues dans les circuits intégrés des dispositifs électroniques, sont insérés ou rapportés au document de sécurité mais ne sont pas compensés en épaisseur. Les E-documents peuvent alors présenter une augmentation localisée de leur épaisseur, ce qui peut gêner l'esthétique du document final, rendre malaisé son empilage lors du stockage, gêner son impression et/ou sa personnalisation, par exemple par impression jet d'encre ou laser lors des étapes d'impression des données liées au porteur du E-document et enfin gêner l'application de films de sécurité et/ou films protecteurs laminés sur les mentions imprimées de ces documents.

Par exemple, une surépaisseur de 75 µm sur un des volets d'un livret de passeport électronique intégrant dans l'un des volets de la couverture un écran électromagnétique peut gêner la personnalisation du livret en impression jet d'encre.

Il existe donc un besoin pour perfectionner encore les E-documents connus. L'invention vise notamment à remédier à certains inconvénients de l'art antérieur et elle y parvient grâce à une structure laminée selon la revendication 1.

On désigne par « structure laminée » une structure multicouche comportant des couches fibreuses ou polymères assemblées, par exemple, par lamination à froid ou à chaud au moyen d'une ou plusieurs couches d'adhésif intermédiaires ou sans couche d'adhésif, par soudure ou fusion.

On désigne par "dispositif à microcircuit" un dispositif comprenant au moins un microcircuit intégré à mémoire, avec ou sans microprocesseur, relié à au moins une antenne et permettant d'échanger des données sans contact.

On désigne par « élément de perturbation électromagnétique » un élément ayant la propriété d'atténuer, de perturber ou de bloquer l'onde électromagnétique émise par un lecteur externe lors d'une communication avec l'E-document et plus particulièrement ayant la propriété d'atténuer, de perturber ou de bloquer le couplage du dispositif à microcircuit intégré sans contact avec un lecteur externe.

La structure est par exemple différente d'un E-document, étant destinée à être intégrée a un E-document, étant par exemple montée entre des pages de l'E-document et la couverture de ce dernier.

Les volets de la structure laminée selon l'invention peuvent être plans, la présence de l'élément de perturbation électromagnétique et/ou du microcircuit intégré et/ou de l'antenne étant compensée en épaisseur dans chacun des volets. Les volets de la structure laminée selon l'invention peuvent aussi être coplanaires, le premier et le deuxième volet de la structure laminée présentant la même épaisseur.

L'invention peut permettre de fournir une structure laminée finie unique portant à la fois , notamment comportant à la fois, un élément de perturbation électromagnétique et un dispositif à microcircuit permettant d'échanger des données sans contact, cette structure étant prête à l'emploi pour la confection d'un E-document, par exemple un permis de conduire ou une carte grise électronique, la structure finie présentant par ailleurs les qualités de durabilité voulues par l'usage ultérieur du E-document.

L'invention peut permettre aussi de fournir une structure semi-finie unique portant à la fois un élément de perturbation électromagnétique et un dispositif à microcircuit permettant d'échanger des données sans contact, cette structure laminée semi-finie étant directement intégrable dans un document à volets, par exemple dans un livret ou entre deux corps de carte, sans modifier les machines automatiques de montage pour la fabrication des E-documents chez l'intégrateur final.

Cette structure semi-finie peut présenter à la fois l'avantage de protéger mécaniquement le dispositif RFID sans contact lors de l'opération d'intégration dans le E document final mais aussi celui de ne pas montrer de surépaisseur localisée tant au niveau du dispositif RFID que de l'élément de perturbation électromagnétique ce qui permet l'intégration de cette structure dans le reste du document sans modifier l'aspect extérieur de ce dernier.

Selon l'invention, le premier volet comporte au moins un dispositif à microcircuit dit à fonctionnement sans contact, c'est à dire reposant sur l'utilisation d'une onde électromagnétique radiofréquence émise par un lecteur externe en direction d'une antenne connectée au microcircuit intégré.

La structure laminée peut comporter en particulier un dispositif à microcircuit intégré adapté à la technologie de communication sans contact décrite dans la norme ISO 14443.

Le dispositif à microcircuit permettant d'échanger des données sans contact comprend par exemple une puce, par exemple une puce dite "sur *strap",* ou une puce module connectée à une antenne qui peut être de type filaire, imprimée notamment en sérigraphie, gravée, transférée, déposée chimiquement ou réalisée par galvanoplastie. En variante, l'antenne peut être portée par le microcircuit intégré de la puce.

La structure laminée selon des exemples de mise en œuvre de l'invention peut également comprendre des dispositifs à microcircuits permettant d'échanger avec et sans contact tels que les systèmes hybrides à deux microcircuits intégrés contact et sans contact ou tels que les systèmes dits *"dual"* avec une seule puce pouvant fonctionner avec et sans contact.

### Elément de perturbation électromagnétique

L'élément de perturbation électromagnétique peut comprendre des moyens d'atténuation, de perturbation ou de blocage du couplage électromagnétique entre le dispositif à microcircuit intégré sans contact et un lecteur externe, de type matériau magnétique, matériau conducteur ou circuit résonateur.

L'élément de perturbation électromagnétique peut être formé à l'aide de l'un au moins des éléments suivants :
- un support, pouvant être choisi parmi un film en matière plastique, un papier, un textile ou un non-tissé, laminé ou contrecollé avec au moins un film métallique, par exemple un film en aluminium ou en cuivre,
- un support métallisé, notamment par métallisation sous vide ou par traitement chimique, le support pouvant être choisi parmi un film en matière plastique, un papier, un textile ou un non-tissé,
- un support, notamment en papier ou en matière plastique, chargé avec une charge électriquement conductrice telle que du noir de carbone ou des fibres de carbone, des fibres métalliques, des fibres métallisées, des paillettes métalliques, une poudre métallique ou avec un agent conducteur tel qu'un sel, en particulier le chlorure de sodium ou le chlorure d'ammonium,
- un support à fils entrecroisés, notamment un tissé, un tricot, une grille, une partie au moins des fils étant en matériau électriquement conducteur, par exemple en métal,
- un support non-tissé comportant des fibres conductrices, par exemple des fibres métalliques, éventuellement mélangées à des fibres synthétiques,
- un support, notamment un film, présentant une structure ajourée en métal,
- un film métallique,
- une couche métallique telle que du cuivre ou du zinc pulvérisé,
- un vernis ou une peinture électriquement conducteur, par exemple à base de cuivre, de nickel ou d'argent,
- un polymère électriquement conducteur tel que le polypyrrole, le polyacétylène et le polythiophène,
- un adhésif électriquement conducteur,
- un matériau comprenant des nanotubes de carbone.
- une impression réalisée avec des encres conductrices selon un motif déterminé.

L'élément de perturbation électromagnétique peut également être formé à l'aide de l'un au moins des éléments suivants :
- un support, pouvant être choisi parmi un film en matière plastique, un papier, un textile ou un non-tissé, laminé ou contrecollé avec au moins un film magnétique,
- un support pouvant être choisi parmi un film en matière plastique, un papier, un textile ou un non-tissé, avec un revêtement magnétique, déposé par exemple sous vide ou par traitement chimique,
- un support, notamment en papier ou en matière plastique, chargé avec une charge magnétique telle que des ferrites,
- un support, notamment un film, présentant une structure ajourée en matériau magnétique,
- un film magnétique,
- une couche métallique en matériau magnétique pulvérisé.
- un vernis ou une peinture magnétique,
- un adhésif comportant des particules magnétiques.
- un matériau comprenant des nanoparticules magnétiques.

L'élément de perturbation électromagnétique peut s'étendre partiellement ou totalement sur la surface du premier volet. Il peut également s'étendre partiellement ou totalement sur la surface d'un autre ou plusieurs autres volets et éventuellement sur toute la surface de la structure.

Dans un cas particulier, l'élément de perturbation peut présenter des formes et/ou dimensions variées. Par exemple, l'élément de perturbation électromagnétique peut présenter un contour rectangulaire, carré, courbe, par exemple circulaire ou elliptique. L'élément de perturbation électromagnétique peut former un motif plein. En variante, l'élément de perturbation se présente sous la forme d'une bande se refermant sur elle-même, cette bande étant par exemple sensiblement rectangulaire ou circulaire. L'élément de perturbation électromagnétique peut présenter par exemple un motif en grille, si on le souhaite. Dans un cas particulier, l'élément de perturbation électromagnétique peut prendre la forme d'un circuit résonateur de type antenne.

Ainsi, dans au moins une configuration pliée de la structure, par exemple lorsque l'angle entre le premier volet et le deuxième volet est inférieur ou égal à 10°, l'élément de perturbation électromagnétique empêche l'accès en lecture et/ou en écriture aux informations enregistrées dans le dispositif à microcircuit intégré, que le lecteur soit situé devant le premier ou le deuxième volet.

### Couches de support :

La première couche de support peut être une couche fibreuse, par exemple en papier ou en non-tissé. Par « couche fibreuse » on entend une couche à base de fibres cellulosiques, par exemple de fibres de coton, et/ou de fibres synthétiques, par exemple des fibres de polyamide et/ou de polyester, et/ou de fibres organiques naturelles autres que cellulosiques et/ou de fibres minérales. En particulier cette couche fibreuse peut être une couche fibreuse saturée d'un latex polymère et/ou être couchée.

En variante, la première couche de support peut être une couche polymère.

Par couche polymère, on entend une couche comportant du polyéthylène (PE), du polypropylène (PP), du polychlorure de vinyle (PVC), du polyéthylène téréphtalate (PET), du polycarbonate (PC), du polyester carbonate (PEC), du polyéthylène téréphtalate glycol (PETG), un copolymère d'acrylonitrile butadyène styrène (ABS). En particulier, cette couche polymère peut être chargée avec des charges minérales comme par exemple le film de polyéthylène chargé de silice commercialisé sous le nom de TESLIN ® ou ARTYSIN ® par la société PPG INDUSTRIES.

Par « couche polymère » on entend aussi une couche coextrudée, réalisée à partir d'au moins un matériau polymère, et comportant une couche de cœur et au moins une couche de peau, la couche de cœur comportant des vides. La « couche de cœur » correspond à une couche de base plus éloignée de la surface de la couche que la « couche de peau » qui correspond à une couche de surface. La couche peut en particulier être réalisée selon l'enseignement des demandes EP 0 470 760 et EP 0 703 071. Par exemple, on peut utiliser pour la couche polymère un film à base de polyéthylène commercialisé sous le nom de POLYART ® par la société ARJOWIGGINS.

La structure peut comporter une deuxième couche de support et une troisième couche de support par exemple sous forme de couche fibreuse ou de couche polymère de natures identiques à celles citées ci-dessus, respectivement portées par le premier et deuxième volet, les deuxième et troisième couches ayant des épaisseurs différentes. La deuxième couche de support peut ne s'étendre qu'en partie sur le premier volet et la troisième couche de support peut ne s'étendre qu'en partie sur le deuxième volet, de façon à ménager une réserve d'épaisseur au niveau de la ligne de pliage de la structure. Par exemple, au niveau de la ligne de pliage, la première couche de support n'est pas recouverte par les deuxième et troisième couches de support.

En variante, les deuxième et troisième couches de support s'étendent continûment de part et d'autre de la ligne de pliage.

### Compensation de l'épaisseur du dispositif à microcircuit intégré et/ou de l'élément de perturbation électromagnétique : volets plans

La première couche de support comporte au moins une cavité dans laquelle est logé au moins partiellement, voire en totalité, le dispositif à microcircuit intégré. Cette cavité peut être traversante ou non.

La deuxième couche de support peut comporter une cavité dans laquelle est logé au moins partiellement, voire en totalité, le dispositif à microcircuit. Cette cavité peut être traversante ou non.

La première couche de support et la deuxième couche de support peuvent comporter par exemple des cavités au moins partiellement en regard, de façon à former un logement dans lequel se trouve le dispositif à microcircuit.

La troisième couche de support peut comporter une cavité dans laquelle est logé l'élément de perturbation électromagnétique. Cette cavité peut être traversante ou non.

Lorsque les première et deuxième couches de support sont assemblées au moyen de couches d'adhésif, ces dernières peuvent comporter une cavité dans laquelle est logée partiellement ou totalement le dispositif à microcircuit.

La première couche de support peut comporter une cavité dans laquelle est logé l'élément de perturbation électromagnétique. Cette cavité peut être traversante ou non.

En variante, la première couche de support et la troisième couche de support comportent des cavités au moins partiellement en regard, de façon à former un logement dans lequel se trouve l'élément de perturbation électromagnétique. En variante, ou en combinaison avec ce qui précède, la structure laminée comporte une deuxième couche de support et une troisième couche de support, respectivement portées par le premier et deuxième volet, et au moins une couche d'un adhésif activable à chaud ou sensible à la pression entre la première couche de support et la deuxième couche de support et/ou entre la première couche de support et la troisième couche de support.

Ladite couche d'adhésif est par exemple capable de fluer sous pression et/ou température, ce qui peut permettre d'obtenir une compensation de l'épaisseur du dispositif à microcircuit et/ou de l'antenne et/ou de l'élément de perturbation électromagnétique situé entre la première couche support et la deuxième ou la troisième couche de support car, lors de l'assemblage de la structure, sous l'action de la pression et/ou de la température, le dispositif à microcircuit et/ou l'antenne et/ou l'élément de perturbation électromagnétique s'enfonce dans la couche adhésive, ce qui permet de compenser l'épaisseur du dispositif à microcircuit et/ou de l'antenne et/ou de l'élément de perturbation électromagnétique.

La couche d'adhésif activable à chaud comporte par exemple un polymère comportant du polyuréthane, du polyéthylène, un polymère acrylique ou vinylique, par exemple du polyvinylacétate et leurs mélanges.

La couche d'adhésif sensible à la pression comporte par exemple un polymère d'acrylique et une résine, par exemple à base de colophane ou d'hydrocarbure.

En variante encore, la structure comporte à la fois une deuxième couche de support et une troisième couche de support telles que décrites ci-dessus et au moins une couche d'un adhésif telle que décrite ci-dessus.

### Compensation d'épaisseur entre les volets : volets coplanaires.

La compensation d'épaisseur entre les premier et deuxième volets de la structure, de façon à ce que les premier et deuxième volets soient par exemple coplanaires, peut être réalisée :
- seulement à l'aide de couches fibreuses et/ou couches polymères d'épaisseurs différentes dans les premier et deuxième volets de la structure,
- seulement à l'aide de couches d'adhésif activable à chaud ou sensible à la pression et/ou d'épaisseurs différentes dans les premier et deuxième volets de la structure,
- seulement à l'aide d'une ou plusieurs couches d'adhésif présent dans les premier et/ou deuxième volets de la structure ou,
- à l'aide de couches fibreuses et/ou couches polymères et/ou de couches d'adhésif d'épaisseurs différentes et de couches d'adhésif activable à chaud ou sensible à la pression.

La structure peut comporter par exemple deux couches d'adhésif respectivement portées par le premier volet et par le deuxième volet et ayant des épaisseurs différentes, ce qui peut permettre de compenser la surépaisseur créée dans le deuxième volet par rapport au premier volet du fait par exemple de la présence de l'élément de perturbation électromagnétique.

Le deuxième volet peut comporter deux couches d'adhésif entre lesquelles est disposé l'élément de perturbation électromagnétique.

### Couche de surface :

Selon un autre mode de réalisation, la structure comporte une couche de surface s'étendant sur le premier et le deuxième volet. La structure peut comporter au moins une couche d'un adhésif activable à chaud ou sensible à la pression, située entre la couche de surface et la première couche de support, permettant d'accueillir dans son épaisseur au moins partiellement le dispositif à microcircuit intégré et/ou l'antenne et/ou l'élément de perturbation électromagnétique.

Ladite couche d'adhésif est par exemple portée par la couche de surface.

La première couche de support et/ou la couche de surface peuvent être en couche polymère, par exemple en polyester, ce qui peut permettre d'obtenir une structure transparente et peut conférer un effet ludique à la structure ainsi obtenue.

Selon un autre mode de réalisation, la structure comporte trois volets définis par la première couche de support qui s'étend sur ces trois volets.

La structure peut comporter une couche de surface s'étendant sur les premier, deuxième et troisième volets.

La structure peut comporter au moins une couche d'un adhésif activable à chaud ou sensible à la pression, située entre la couche de surface et la première couche de support, permettant d'accueillir dans son épaisseur au moins partiellement le dispositif à microcircuit intégré et/ou l'antenne et/ou l'élément de perturbation électromagnétique.

La couche d'adhésif activable à chaud ou sensible à la pression peut s'étendre sur les premier, deuxième et troisième volets.

La couche d'adhésif activable à chaud ou sensible à la pression est par exemple portée, avant assemblage de la structure, par la couche de surface et s'étend par exemple continûment sur la couche de surface.

L'élément de perturbation électromagnétique peut comporter deux parties respectivement portées par le deuxième et le troisième volet.

Les deux parties de l'élément de perturbation peuvent s'étendre continûment par delà la ligne de pliage ou être distinctes.

Les deuxième et troisième volets peuvent être adjacents ou en variante être reliés par le premier volet.

La structure lorsqu'elle présente deux volets, est par exemple destinée à être fixée par collage entre la couverture et la page de garde d'un E-document se présentant sous la forme d'un livret.

L'invention peut être utilisée pour la production d' un E-document comportant une structure telle que décrite ci-dessus. La structure est par exemple intégrée à l'E-document.

Un exemple d'effet similaire à l'invention consiste en une structure pour E-document comportant une première couche de support en papier définissant deux volets reliés par au moins une ligne de pliage :
- un premier volet portant, notamment comportant, un dispositif à microcircuit sous forme d'une puce module connectée à une antenne filaire,
- un deuxième volet portant, notamment comportant, un élément de perturbation électromagnétique sous forme d'un dépôt de particules métalliques, par exemple de zinc, réalisé par pulvérisation par exemple.

Le premier volet peut comporter la première couche de support en papier, une première couche d'adhésif activable à chaud enduite sur cette première couche de support et une deuxième couche de support en papier enduite d'une seconde couche d'adhésif activable à chaud, la première couche de support et la seconde couche de support étant dotées chacune d'une fenêtre traversante ou non, en regard l'une de l'autre, de façon à accueillir chacune une partie de la puce module et à la compenser en épaisseur, lors l'assemblage des première et seconde couches.

L'antenne filaire du dispositif à microcircuit est par exemple déposée par ultrasons sur la première couche d'adhésif enduite sur la première couche de support en papier.

Les première et deuxième couches de support en papier sont par exemple laminées par le biais des première et seconde couches d'adhésif à chaud de façon à ce que l'antenne du dispositif à microcircuit soit située entre les première et deuxième couches d'adhésif activables à chaud et entre les première et deuxième couches de support en papier.

Le deuxième volet peut comporter la première couche de support en papier enduite de la première couche d'adhésif activable à chaud et une troisième couche de support en papier sur laquelle a été déposé préalablement l'élément de perturbation électromagnétique. Ces deux couches de support en papier sont par exemple laminées via la première couche d'adhésif activable à chaud de façon à ce que l'élément de perturbation électromagnétique soit situé entre les première et troisième couches de support en papier.

Les deuxième et troisième couches de support en papier peuvent s'étendre partiellement sur le premier support des premier et deuxième volets sans recouvrir la ligne de pliage de façon à créer une réserve en épaisseur au niveau de la ligne de pliage.

Selon ces exemples, la compensation d'épaisseur entre les deux volets, liée à la présence de l'élément de perturbation électromagnétique dans le deuxième volet, est réalisée en utilisant des deuxième et troisième couches de support d'épaisseurs différentes et des première et deuxième couches d'adhésifs d'épaisseurs différentes.

Des exemples de mise en œuvre similaires peuvent être réalisés sans qu'il y ait de seconde couche d'adhésif enduite sur la seconde couche de support.

Un exemple d'effet similaire à l'invention consiste en une structure pour E-document comportant une première couche de support en papier définissant deux volets reliés par au moins une ligne de pliage :
- un premier volet portant, notamment comportant, un dispositif à microcircuit intégré sous forme d'une puce module connectée à une antenne filaire déposée par ultrasons dans la première couche de support en papier,
- un deuxième volet portant, notamment comportant, un élément de perturbation électromagnétique sous forme d'un dépôt de particules métalliques, par exemple de zinc, réalisé par pulvérisation par exemple.

Le premier volet peut comporter la première couche de support en papier et une deuxième couche de support en papier qui sont dotées chacune d'une fenêtre traversante ou non, en regard l'une de l'autre, de façon à accueillir la puce module et à la compenser en épaisseur, lors l'assemblage des premières et deuxièmes couches.

Ces deux couches sont par exemple laminées par le biais d'une première couche d'adhésif activable à chaud préalablement appliquée sur la deuxième couche de support en papier, de façon à ce que l'antenne du dispositif à microcircuit soit située entre les première et deuxième couches de support en papier.

Le deuxième volet comporte par exemple la première couche de support en papier et une troisième couche de support en papier sur laquelle a été déposé préalablement l'élément de perturbation électromagnétique. Ces deux couches de support en papier peuvent être laminées par le biais d'une deuxième couche d'adhésif activable à chaud, la deuxième couche d'adhésif étant de préférence de nature équivalente à la première couche d'adhésif.

La deuxième couche d'adhésif est par exemple préalablement appliquée sur la troisième couche de support en papier, de façon à ce que l'élément de perturbation électromagnétique soit situé entre les première et troisième couches de support en papier. Les deuxième et troisième couches de support en papier peuvent s'étendre partiellement sur la première couche de support des premier et deuxième volets sans recouvrir la ligne de pliage de façon à créer une réserve en épaisseur au niveau de la ligne de pliage.

Selon ces exemples, la compensation d'épaisseur entre les deux volets, liée à la présence de l'élément de perturbation électromagnétique dans le deuxième volet, est par exemple réalisée en utilisant des deuxième et troisième couches de support d'épaisseurs différentes.

Un exemple d'effet similaire à l'invention consiste en une structure pour E-document comportant une première couche de support en papier définissant deux volets reliés par au moins une ligne de pliage :
- un premier volet portant, notamment comportant, un dispositif à microcircuit intégré sous forme d'une puce module connectée à une antenne filaire déposée par ultrasons dans la première couche de support en papier,
- un deuxième volet portant, notamment comportant, un élément de perturbation électromagnétique sous forme d'un film métallique, par exemple en aluminium.

Le premier volet peut comporter la première couche de support en papier et une deuxième couche de support en papier, ces première et deuxième couches étant chacune pourvues d'une fenêtre, traversante ou non, positionnées en regard de façon à accueillir la puce module et à la compenser en épaisseur, lors de l'assemblage des première et deuxième couches.

Ces deux couches sont par exemple laminées par le biais d'une première couche d'adhésif activable à chaud préalablement appliquée sur la deuxième couche de support en papier, de façon à ce que l'antenne du dispositif à microcircuit intégré sans contact soit située entre les première et deuxième couches de support en papier.

Le deuxième volet comporte par exemple la première couche de support en papier et une troisième couche de support en papier sur laquelle a été préalablement laminé l'élément de perturbation électromagnétique via une troisième couche d'adhésif permanent. Les première et troisième couches de support en papier peuvent être laminées par le biais d'une deuxième couche d'un adhésif activable à chaud, cette deuxième couche d'adhésif étant notamment de même nature que la première couche d'adhésif, de façon à ce que l'élément de perturbation électromagnétique soit situé entre les première et troisième couches.

Les deuxième et troisième couches de support peuvent s'étendre partiellement sur le premier support des premier et deuxième volets sans recouvrir la ligne de pliage de façon à créer une réserve en épaisseur au niveau de la ligne de pliage.

Selon ces exemples, la compensation d'épaisseur entre les deux volets, liée à la présence de l'élément de perturbation électromagnétique dans le deuxième volet peut être réalisée en utilisant des deuxième et troisième couches de support en papier d'épaisseurs différentes et /ou des première, deuxième et troisième couches d'adhésif d'épaisseurs différentes.

Un exemple d'effet similaire à l'invention consiste en une structure pour E-document, comportant une première couche de support en papier définissant deux volets reliés par au moins une ligne de pliage :
- un premier volet portant, notamment comportant, un dispositif à microcircuit sous forme d'une puce connectée à une antenne sérigraphiée, par exemple en argent, supportés par la première couche de support en papier, et
- un deuxième volet portant, notamment comportant, un élément de perturbation électromagnétique sous forme d'un dépôt de poudre métallique, par exemple de poudre de zinc.

Le premier volet comporte par exemple la première couche de support en papier et une deuxième couche de support en papier, la deuxième couche étant dotée d'une fenêtre traversante en regard de la puce fixée sur la première couche de support.

Ces première et deuxième couches de support sont par exemple laminées par le biais d'une première couche d'adhésif sensible à la pression, de façon à ce que l'antenne du dispositif à microcircuit intégré sans contact soit située entre les première et deuxième couches de support en papier et que la puce se retrouve dans la fenêtre de la deuxième couche de support en papier.

Le deuxième volet comporte par exemple la première couche de support en papier et une troisième couche de support en papier sur laquelle a été déposé préalablement par pulvérisation l'élément de perturbation électromagnétique.

Ces deux couches de support en papier sont par exemple laminées par le biais d'une deuxième couche d'adhésif sensible à la pression, de préférence de nature équivalente à la première couche d'adhésif, de façon à ce que l'élément de perturbation électromagnétique soit situé entre les première et troisième couches de support en papier.

Les deuxième et troisième couches de support en papier peuvent être jointives et former une seule et unique couche de surface qui s'étend totalement sur la première couche de support des premier et deuxième volets.

Selon ces exemples, la compensation d'épaisser entre les deux volets, liée à la présence de l'élément de perturbation électromagnétique dans le deuxième volet est par exemple réalisée en utilisant des première et deuxième couches d'adhésif sensible à la pression et d'épaisseurs différentes.

L'agencement de la structure peut d'une part permettre qu'il n'y ait pas de modification d'aspect de la structure et par conséquent de l'E-document comportant une telle structure semi-finie avec dispositif à microcircuit et élément de perturbation électromagnétique embarqués par rapport à une structure sans élément de perturbation électromagnétique, l'élément de perturbation étant pris en sandwich entre la première et la troisième couche de support en papier.

D'autre part, la structure peut ne pas présenter pas de modification de matériaux à sa surface puisque les première, deuxième et troisième couches de support sont en papier, ce qui peut permettre à cette structure avec élément de perturbation électromagnétique embarqué de conserver son aptitude au contre-collage ou à toute autre opération de transformation.

Un exemple d'effet similaire à l'invention consiste en une structure pour E-document comportant une première couche de support en polymère définissant trois volets reliés par au moins une ligne de pliage :
- un premier volet portant, notamment comportant, un dispositif à microcircuit sous forme d'une puce sur strap et d'une antenne, par exemple en argent, sérigraphiée,
- un deuxième volet portant, notamment comportant, une première partie d'élément de perturbation électromagnétique sous forme d'un aplat d'encre conductrice, imprimé en sérigraphie par exemple, et
- un troisième volet portant, notamment comportant, une deuxième partie d'élément de perturbation électromagnétique sous forme d'un aplat d'encre conductrice, imprimé en sérigraphie par exemple.

Les premier et deuxième volets peuvent être reliés par une première ligne de pliage et les premier et troisième volets peuvent être reliés par une deuxième ligne de pliage, de telle sorte que les deuxième et troisième volets sont reliés par le premier volet.

Les deux parties de l'élément de perturbation électromagnétique sont par exemple distinctes et séparées par deux lignes de pliage

Le premier volet comporte par exemple la première couche de support en polymère et une couche de surface en polymère, la première couche supportant une puce *strap* connectée à l'antenne.

La première couche de support et la couche de surface sont par exemple laminées par le biais d'une couche d'adhésif activable à chaud préalablement appliquée sur la couche de surface en polymère, de façon à ce que le dispositif à microcircuit soit situé entre la première couche de support et la couche de surface en polymère et que la puce et son antenne se retrouvent noyées dans l'épaisseur de l'adhésif activable à chaud et ainsi compensées en épaisseur. La couche de surface peut s'étendre sur les deuxième et troisième volets.

Les deuxième et troisième volets peuvent être semblables et comporter la première couche de support en polymère et la couche de surface en polymère sur laquelle a été imprimé un élément de perturbation électromagnétique. La première couche de support et la couche de surface des deuxième et troisième volets peuvent être laminées par le biais de la couche d'adhésif activable à chaud préalablement appliquée sur la couche de surface en polymère, de façon à ce que les éléments de perturbations électromagnétiques soient situés respectivement entre la première couche de support et la couche de surface.

La compensation d'épaisseur entre les trois volets, liée à la présence des deux éléments de perturbations électromagnétiques, et/ou de l'antenne et/ou du dispositif à microcircuit dans la structure est par exemple réalisée en utilisant la couche d'adhésif activable à chaud qui de part sa nature thermoplastique va fluer et enrober le dispositif à microcircuit lors de la lamination.

Cette structure peut être telle que dans une configuration de pliage en accordéon, par exemple celle représentée à la figure 1b, les deux éléments de perturbations électromagnétiques s'opposent à une lecture et/ou écriture sans contact du dispositif à microcircuit intégré sans contact, quelle que soit la façon dont est présentée la structure par rapport au lecteur externe, c'est-à-dire que ce soit le premier ou le troisième volet qui soit devant le lecteur.

Un exemple d'effet similaire à l'invention consiste en une structure pour E-document comportant une première couche de support en polymèr définissant trois volets reliés par au moins une ligne de pliage :
- un premier volet portant, notamment comportant, un dispositif à microcircuit intégré sous forme d'une puce sur strap et d'une antenne sérigraphiée, par exemple en argent,
- un deuxième volet portant, notamment comportant, une première partie d'élément de perturbation électromagnétique sous forme d'un aplat d'encre imprimé, par exemple en sérigraphie, et
- un troisième volet portant, notamment comportant, une deuxième partie d'élément de perturbation électromagnétique sous forme d'un aplat d'encre imprimé, par exemple en sérigraphie.

Les premier et deuxième volets sont par exemple reliés par une première ligne de pliage et les deuxième et troisième volets sont reliés par une deuxième ligne de pliage, de sorte que les premier et troisième volets sont reliés par le deuxième volet.

Les deux parties de l'élément de perturbation électromagnétique s'étendent par exemple continûment par-delà la deuxième ligne de pliage.

Le premier volet comporte par exemple la première couche de support en polymère et une couche de surface en polymère, la première couche supportant une puce sur *strap* connectée à l'antenne.

La première couche de support et la couche de surface sont par exemple laminées par le biais d'une couche d'adhésif activable à chaud préalablement appliquée sur la couche de surface en polymère, de façon à ce que le dispositif à microcircuit intégré sans contact soit situé entre la première couche de support et la couche de surface en polymère et que la puce et son antenne se retrouvent noyées dans l'épaisseur de l'adhésif activable à chaud et ainsi compensées en épaisseur. La couche de surface peut s'étendre sur les deuxième et troisième volets.

Les deuxième et troisième volets peuvent être semblables et comporter la première couche de support en polymère et la couche de surface en polymère sur laquelle a été imprimé un élément de perturbation électromagnétique. La première couche de support et la couche de surface des deuxième et troisième volets peuvent être assemblées par laminage par le biais de la couche d'adhésif activable à chaud préalablement appliquée sur la couche de surface en polymère, de façon à ce que les éléments de perturbation électromagnétiques soient situés respectivement entre la première couche de support et la couche de surface.

La compensation d'épaisseur entre les trois volets liée à la présence des deux parties d'élément de perturbation électromagnétique et/ou de l'antenne et/ou du dispositif à microcircuit intégré dans la structure est par exemple réalisée en utilisant la couche d'adhésif activable à chaud qui de par sa nature thermoplastique va fluer et enrober le dispositif à microcircuit lors de la lamination.

Dans tout ce qui précède, le dispositif à microcircuit peut être rigidement fixé au premier volet et l'élément de perturbation électromagnétique peut être rigidement fixé au deuxième volet et, le cas échéant, au troisième volet lorsque la structure comporte trois volets.

Cette structure peut être telle que dans une configuration de pliage avec le premier volet plié à l'intérieur sur le deuxième volet lui même plié à l'intérieur sur le troisième volet, par exemple celle représentée à la figure 1a, les deux parties d'élément de perturbation électromagnétique s'opposent à une lecture et/ou écriture sans contact du dispositif à microcircuit intégré quelle que soit la façon dont est présentée la structure par rapport au lecteur externe.

L'invention pourra être mieux comprise à la lecture de la description qui va suivre, d'exemples de mise en œuvre non limitatifs de celle-ci, et à l'examen du dessin annexé, sur lequel :
- les figures la à lc représentent différents exemples de pliage de documents,
- la figure 2 représente une vue en coupe d'un exemple d'E-document comportant une structure selon l'invention,
- les figures 3a et 3b représentent la structure semi-finie avant son assemblage respectivement en coupe et en vue de dessus,
- les figures 4a, 4b, 5a, 5b et 6a, 6b sont des vues analogues aux figures 3a et 3b d'autres variantes de mises en œuvre de l'invention,
- la figure 7 est une vue éclatée en coupe d'un exemple de structure,
- la figure 8 représente une variante de la structure représentée à la figure 7,
- les figures 9 à 9f sont des représentations schématiques, en coupe, de variantes de mise en œuvre de l'invention, et
- la figure 10 représente en coupe une variante de réalisation de la structure.

Sur le dessin, les proportions relatives n'ont pas toujours été respectées, dans un souci de clarté.

On a représenté à la figure 2 un E-document 1 comprenant une structure laminée 8 selon des exemples de mise en œuvre de l'invention. Dans l'exemple décrit, cet E-document est un passeport sous forme d'un livret relié à deux volets mais l'invention n'est pas limitée à un tel exemple, comme on le verra par la suite.

Le document 1 comporte dans l'exemple décrit une couverture 2, une charnière 3, une pluralité de pages 4, deux pages de garde 7, ainsi qu'une structure 8 qui est dans l'exemple considéré montée entre la couverture 2 et les pages de garde 7 du document 1.

Comme on peut le voir à la figure 2, la structure 8 comporte dans l'exemple décrit deux volets 5 et 6 reliés par une ligne de pliage 14. Les deux volets 5 et 6 sont définis par une première couche de support 10 de nature fibreuse, par exemple en papier ou en non-tissé ou en variante en polymère.

Les deux volets de la structure représentée à la figure 2 sont plans et sont de surcroit coplanaires, c'est à dire sensiblement de même épaisseur de chaque coté de la ligne de pliage. La structure présente dans l'exemple décrit au niveau de la charnière 3 du livret une réserve de moindre épaisseur afin de faciliter le pliage du livret.

Le premier volet 5 de la structure laminée 8 comporte un dispositif électronique permettant d'échanger des données sans contact, ce dispositif électronique comportant dans l'exemple décrit un dispositif à microcircuit intégré comportant une puce module 11, et une antenne 12.

Dans l'exemple décrit, l'antenne est filaire, étant par exemple en cuivre. L'invention n'est bien sûr pas limitée à un tel exemple, l'antenne pouvant par exemple être réalisée par sérigraphie ou par gravure.

Le premier volet 5 comporte également une deuxième couche de support 16. Dans l'exemple décrit, la première couche de support 10 et la deuxième couche de support 16 présentent chacune une cavité 17 ou 18, ces cavités étant situées en partie en regard l'une de l'autre.

Une première partie de la puce module 11 est dans l'exemple de la figure 2 logée dans la cavité 18 de la première couche de support 10 et une deuxième partie de la puce 11 est logée dans la cavité 17 de la deuxième couche de support 16.

Le deuxième volet 6 de la structure 8 comporte un élément de perturbation électromagnétique 13 dont l'une des faces est, dans l'exemple décrit, en regard de la première couche de support 10, tandis que l'autre face est recouverte par une troisième couche de support 15 du deuxième volet 6.

Dans l'exemple considéré, les première, deuxième et troisième couches de support sont en papier et la compensation en épaisseur du dispositif à microcircuit intégré et/ou de l'élément de perturbation électromagnétique 13 est obtenue par des différences d'épaisseur des couches de support 15 et 16.

L'élément de perturbation électromagnétique 13 peut être réalisé de diverses façons.

L'élément de perturbation électromagnétique est par exemple un film métallique d'aluminium d'une épaisseur comprise entre 5 et 50 µm ou une couche de zinc obtenue par pulvérisation, d'une épaisseur comprise par exemple entre 5 et 80 µm.

Pour une facilité de compréhension, les couches d'adhésifs qui peuvent être utilisées pour assembler les couches de support 10, 15 et 16 de la structure 8 au niveau des deux volets ou encore pour assembler la structure laminée 8 avec la couverture 2 et les pages de garde 7 de l'E-document 1 n'ont pas été représentées sur la figure 2.

On va maintenant décrire différents exemples de réalisation d'une structure laminée 8 selon l'invention.

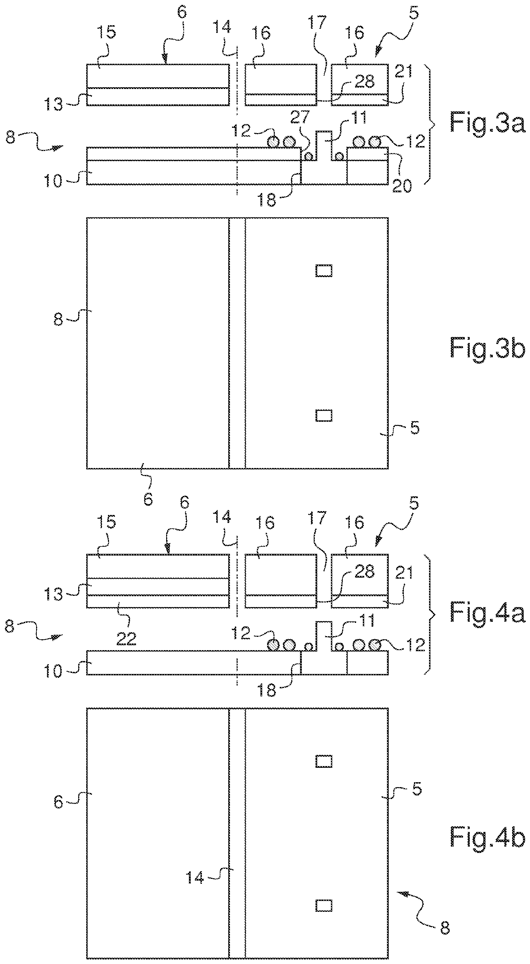

On a représenté à la figure 3a un premier exemple de structure 8.

Dans cet exemple, la structure 8 comporte une première couche de support 10 en couche fibreuse et notamment en papier ayant par exemple une épaisseur de 160 µm, cette première couche de support étant recouverte par une première couche d'un adhésif activable à chaud 20, par exemple en polyuréthane. En variante, la couche d'adhésif 20 pourrait être sensible à la pression, étant par exemple à base de polymère acrylique et de résine colophane.

Dans cet exemple, la première couche d'adhésif 20 s'étend sur le premier volet 5 et le deuxième volet 6.

Le premier volet 5 comporte une puce module 11, par exemple une puce de type MOB4 commercialisée par la société Philips®, en partie logée dans la cavité 18 ménagée dans la couche de support 10 ainsi qu'une antenne 12 de type filaire en cuivre qui est insérée partiellement par ultrasons dans la couche d'adhésif 20 et qui est connectée au *lead frame* de la puce module 11.

Le premier volet 5 comporte dans l'exemple décrit une deuxième couche de support 16 dont la face inférieure est recouverte par une deuxième couche 21 d'un adhésif activable à chaud, qui est par exemple le même adhésif que celui de la couche d'adhésif 20 et qui est destinée à venir au contact de la couche d'adhésif 20 lors de l'assemblage de la structure 8.

La deuxième couche de support 16 peut comporter une cavité traversante 17 pour recevoir une autre partie de la puce 11 lorsque la structure 8 est assemblée.

Les couches d'adhésif 20 et 21 ont dans l'exemple décrit la même épaisseur, par exemple 15µm.

Comme on peut le voir sur la figure 3a, les première et deuxième couches d'adhésif peuvent présenter chacune une cavité traversante 27 et 28 pour recevoir une partie de la puce 11 lors de l'assemblage de la structure 8.

Le deuxième volet 6 comporte un élément de perturbation électromagnétique 13 et une troisième couche de support 15. L'élément de perturbation électromagnétique 13 est par exemple en zinc et directement pulvérisé sur la troisième couche de support 15. L'épaisseur de l'élément de perturbation électromagnétique 13 est par exemple de 50 µm d'épaisseur.

Dans les exemples des figures 3a à 5a, les deuxième et troisième couches de support 15 et 16 sont réalisées en couche fibreuse par exemple en papier mais on ne sort pas du cadre de la présente invention lorsque ces couches de support sont en couche polymère

Dans l'exemple de la figure 3a, la couche d'adhésif 21 et la deuxième couche de support 16 ne s'étendent pas sur la totalité du premier volet 5 et l'élément de perturbation électromagnétique 13 et la troisième couche de support 15 ne s'étendent pas sur la totalité du deuxième volet 6 de façon à obtenir une réserve en épaisseur au niveau de la ligne de pliage 14 de la structure 8.

L'élément de perturbation électromagnétique 13 ne présente, dans cet exemple, pas de face recouverte d'une couche d'adhésif avant assemblage sur la première couche de support 10 de la structure 8.

Comme on peut le voir sur la figure 3a, la troisième couche de support 15 et la deuxième couche de support 16 présentent des épaisseurs distinctes, la troisième couche de support 15 ayant par exemple une épaisseur de 185µm tandis que celle de la deuxième couche de support 16 est par exemple de 220µm.

Cette différence d'épaisseur entre les deuxième et troisième couches peut permettre de compenser la présence dans le deuxième volet de l'élément de perturbation électromagnétique 13. Ainsi, la structure obtenue présente deux volets 5 et 6 coplanaires, c'est à dire ayant sensiblement la même épaisseur.

On a représenté aux figures 4a et 4b un autre exemple de structure selon l'invention. Dans cet exemple, la première couche de support 10 est dépourvue, avant assemblage de la structure 8, d'une couche d'adhésif.

Le premier volet 5 comporte dans cet exemple une couche d'un adhésif activable à chaud 21 recouvrant une face d'une deuxième couche de support fibreuse 16, cette couche d'adhésif 21 étant destinée à venir au contact de la première couche de support 10 lors de l'assemblage de la structure. Cette couche d'adhésif 21 est pourvue d'une cavité traversante 28 destinée à recevoir une partie de la puce 11 lors de l'assemblage de la structure.

Le deuxième volet 6 comporte une couche d'adhésif 22 destinée à venir au contact de la première couche de support 10 lors de l'assemblage de la structure et recouvrant une face de l'élément de perturbation électromagnétique 13. Comme on peut le voir sur la figure 4a, la face de l'élément de perturbation électromagnétique 13 opposée à celle recouverte par la couche d'adhésif 22 est recouverte par la troisième couche de support fibreuse 15.

Dans cet exemple, l'élément de perturbation électromagnétique 13 est réalisé par une couche de zinc directement pulvérisée sur la troisième couche de support 15, ayant par exemple une épaisseur de 60 µm. L'adhésif activable à chaud de la couche 21 est par exemple le même que celui de la couche 21 décrite en référence à la figure 3a.

Dans l'exemple considéré, les adhésifs de la couche 21 et l'adhésif de la couche 22 sont de nature différente, ce dernier étant adapté à l'assemblage de l'élément de masquage électromagnétique métallique 13 avec la deuxième couche support fibreuse 10, tel qu'un polyuréthane monocomposant.

Les couches d'adhésif 21 et 22 peuvent avoir la même épaisseur, par exemple 15 µm.

La troisième couche de support 15 présente par exemple une épaisseur de 160µm tandis que la deuxième couche de support 16 présente par exemple une épaisseur de 220µm, de façon à ce que une fois assemblés, les premier et deuxième volets de la structure présentent sensiblement la même épaisseur.

Comme on peut le voir sur la figure 4a, la couche d'adhésif activable à chaud 21 et la deuxième couche de support 16 sont disposées sur le premier volet 5 d'une part et la couche d'adhésif 22, l'élément de perturbation électromagnétique 13 et la troisième couche de support 15 sont disposées sur le deuxième volet 6 d'autre part, de façon à obtenir une réserve d'épaisseur au niveau de la ligne de pliage 14 de la structure 8.

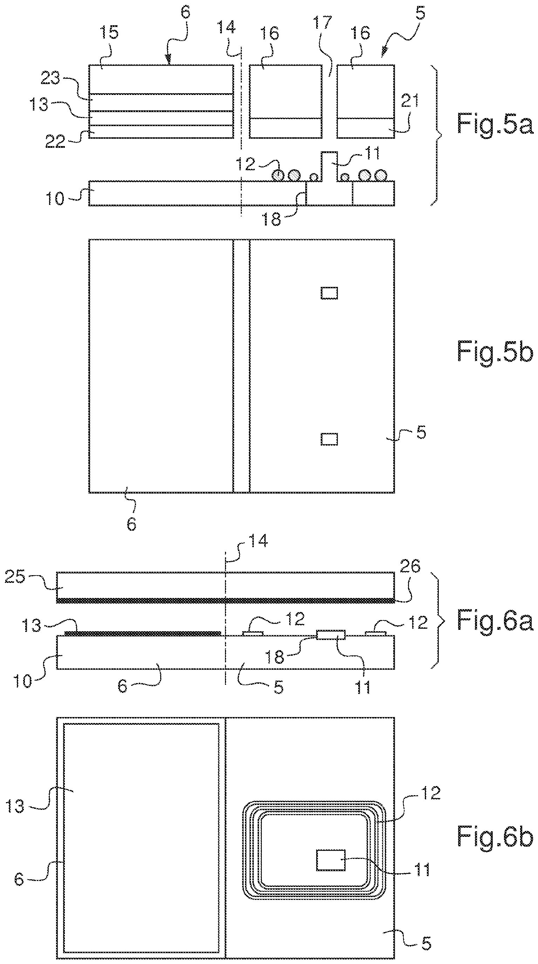

On a représenté aux figures 5a et 5b un autre exemple de structure selon l'invention.

Dans cet exemple, le premier volet 5 comporte une première couche d'adhésif 21 activable à chaud recouvrant avant assemblage de la structure 8 une face de la deuxième couche de support 16 et destinée à venir au contact de la première couche de support 10 lors de l'assemblage.

Le deuxième volet 6 comporte un élément de perturbation électromagnétique 13 sous la forme d'un film en aluminium, par exemple de 40 µm d'épaisseur, pris en sandwich entre deux couches d'adhésif activable à chaud 22 et 23.

La deuxième couche d'adhésif 22 est destinée à venir au contact de la première couche de support 10 lors de l'assemblage de la structure.

La troisième couche d'adhésif 23 est, dans cet exemple, recouverte par une troisième couche de support 15.

Dans l'exemple décrit, avant assemblage de la structure 8, la première couche de support 10 est dépourvue de couche d'adhésif.

Comme on peut le voir, la première couche d'adhésif 21 portée par le premier volet 5 est plus épaisse que la deuxième couche d'adhésif 22 portée par le deuxième volet 6.

L'adhésif de la troisième couche 23 est par exemple différent de l'adhésif des première et deuxième couches 21 et 22.

Comme on peut le voir sur la figure 5a, la première couche d'adhésif activable à chaud 21 et la deuxième couche de support 16 sont disposées sur le premier volet 5 d'une part et la deuxième couche d'adhésif 22, l'élément de perturbation électromagnétique 13, la troisième couche d'adhésif 23 et la troisième couche de support 15 sont disposées sur le deuxième volet 6 d'autre part, de façon à obtenir une réserve d'épaisseur au niveau de la ligne de pliage 14 de la structure 8.

Dans cet exemple, les volets 5 et 6 diffèrent d'une part par l'épaisseur des couches d'adhésif 21, 22 et 23 qu'ils comportent, ainsi que par l'épaisseur des deuxième et troisième couches de support, ce qui permet de compenser la surépaisseur induite par la présence de la puce 11 et de l'antenne 12 dans le premier volet 5 et par l'élément de perturbation électromagnétique 13 dans le deuxième volet 6. Ainsi, les deux volets sont coplanaires.

On a représenté aux figures 6a et 6b une structure selon un autre exemple de mise en œuvre de l'invention.

Dans cet exemple, la structure 8 comporte une première couche de support 10 réalisée en couche polymère, par exemple du polyester transparent.

Cette première couche du support définit deux volets 5 et 6 reliés entre eux par une ligne de pliage 14 réalisée dans l'exemple décrit par rainurage. Le premier volet 5 comporte une puce 11, ainsi qu'une antenne 12 sérigraphiée, par exemple avec une encre à base d'argent. Cette antenne est connectée à la puce par le procédé dit *Flip Chip.* Dans l'exemple décrit, la puce 11 est fixée sur la première couche de support 10.

Le deuxième volet 6 comporte un élément de perturbation électromagnétique 13 réalisé dans l'exemple décrit par impression d'un motif, par exemple un rectangle, avec un polymère conducteur transparent sur la première couche de support 10.

La structure 8 comporte encore, avant assemblage, une couche de surface 25 portant sur sa face en regard de la première couche de support 10 une couche 26 d'adhésif, par exemple d'un adhésif activable à chaud, par exemple en polyéthylène.

Cette couche de surface 25 est notamment réalisée dans la même matière que la première couche de support 10.

La couche d'adhésif 26 de nature thermoplastique permet d'accueillir dans son épaisseur, lors de la lamination des couches de support 10 et 25, au moins partiellement la puce 11, l'antenne 12 et l'élément de perturbation électromagnétique 13.

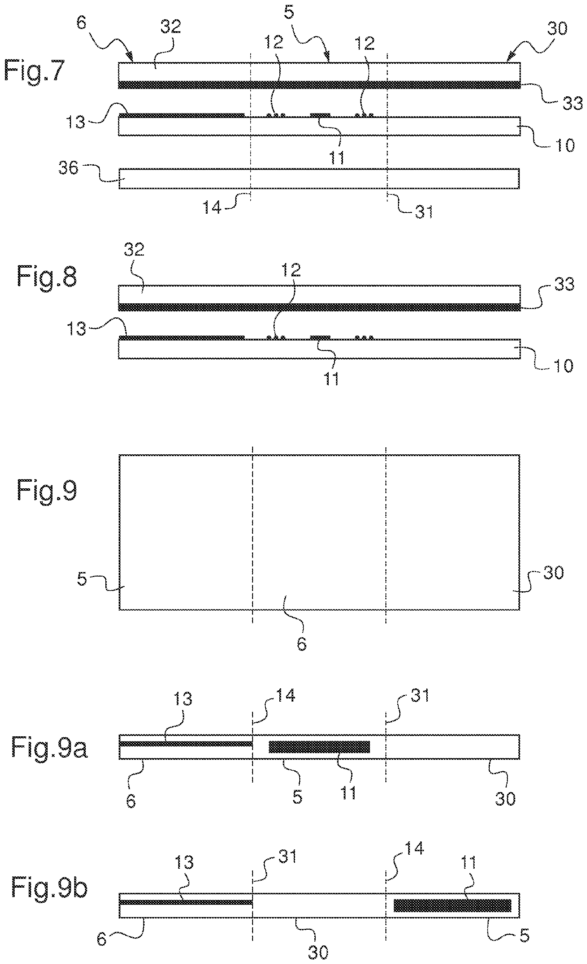

On a représenté aux figures 7 à 9 des structures 8 selon d'autres exemples. De telles structures 8 définissent trois volets 5, 6 et 30 et comportent deux lignes de pliages 14 et 31. De telles structures sont par exemple adaptées à des E-documents présentant trois volets, tels que des permis de conduire.

Dans l'exemple représenté à la figure 7, la structure 8 comporte une première couche de support 10 en papier, comportant un dispositif électronique sous forme d'une puce 11 connectée à une antenne 12 et un élément de perturbation électromagnétique 13.

La structure peut encore comporter encore une couche de surface 32 qui est, dans l'exemple considéré, réalisée en papier et présente une épaisseur uniforme sur les trois volets 5, 6 et 30. Cette couche de surface 32 est par exemple recouverte par une couche d'un adhésif activable à chaud 33 sur sa face en regard de la première couche de support 10.

Comme on peut le voir sur cette figure 7, la couche d'adhésif 33 peut s'étendre continûment sur les premier, deuxième et troisième volets. L'invention n'est bien sûr pas limitée à un tel exemple, la couche 33 pouvant se présenter sous la forme de trois couches distinctes portées respectivement par le premier, deuxième et troisième volets et non reliées directement entre elles.

Dans l'exemple de la figure 7, la structure 8 comporte encore une couche de fond 36 permettant par exemple d'accroître l'épaisseur de la structure ou d'apporter davantage de rigidité à la structure.

Une telle structure, lorsqu'elle est pliée en accordéon selon la figure 1b, empêche toute lecture ou modification des données enregistrées dans la puce, notamment quand le volet comprenant l'élément de perturbation électromagnétique est placé entre le lecteur et le volet comprenant le dispositif à microcircuit intégré.

On a représenté à la figure 8 une structure selon un autre exemple qui ne diffère de l'exemple représenté à la figure 7 que par l'absence de couche de fond 36.

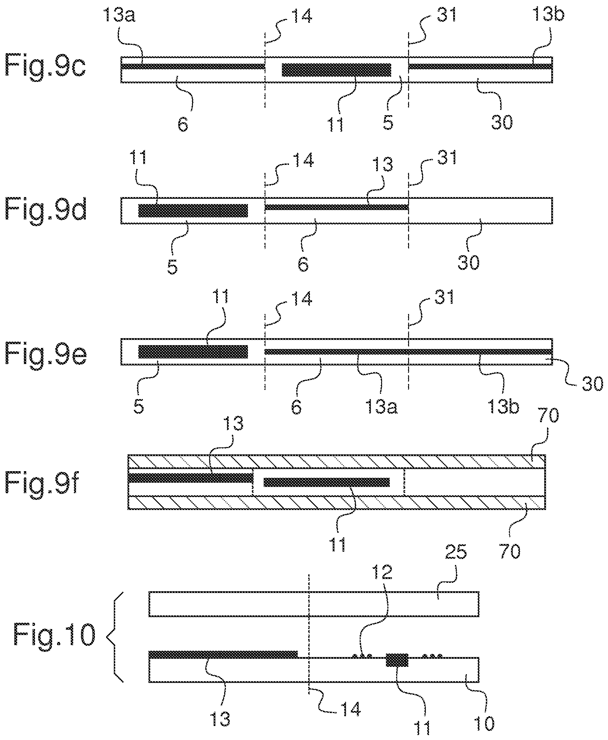

Les exemples décrits aux figures 9 à 9f représentent des variantes de réalisation de structures à trois volets.

Dans l'exemple de la figure 9a, le troisième volet 30 est relié par la ligne de pliage 31 au premier volet qui est disposé entre les deuxième et troisième volets. Dans cet exemple, le troisième volet 30 est dépourvu d'élément de perturbation électromagnétique.

Dans l'exemple de la figure 9b, le troisième volet 30 est relié par la ligne de pliage 14 au premier volet et par la ligne de pliage 31 au deuxième volet, les premier et deuxième volets étant dans cet exemple reliés par l'intermédiaire du troisième volet. Dans cet exemple, le troisième volet 30 est dépourvu d'élément de perturbation électromagnétique.

L'exemple représenté à la figure 9c diffère de celui représenté à la figure 9a par le fait que l'élément de perturbation électromagnétique 13 comporte une première partie d'élément de perturbation 13a portée par le deuxième volet 6 et une deuxième partie d'élément de perturbation 13b portée par le troisième volet 30, la structure étant agencée de telle sorte que, lorsqu'elle est dépliée, le dispositif à microcircuit intégré 11 soit encadré, selon au moins une dimension, par les première et deuxième parties 13a et 13b de l'élément de perturbation électromagnétique 13. Dans cet exemple, les première et deuxième parties d'élément de perturbation électromagnétiques sont distinctes, c'est-à-dire non jointives.

Dans l'exemple des figures 9d et 9e, le troisième volet 30 est relié par la ligne de pliage 31 au deuxième volet, ce dernier étant relié par la ligne de pliage 14 au premier volet 5.

Dans l'exemple de la figure 9d, le troisième volet 30 est dépourvu d'élément de perturbation électromagnétique tandis que dans l'exemple de la figure 9e, l'élément de perturbation électromagnétique 13 se présente sous la forme de deux parties d'élément de perturbation 13a et 13b portées respectivement par le deuxième et troisième volets et reliées entre elles de façon à ce que l'élément de perturbation électromagnétique 13 s'étende continûment sur les deuxième et troisième volets par-delà la ligne de pliage 31.

La figure 9f illustre la possibilité pour la structure, par exemple une structure telle qu'illustrées dans les figures 9a à 9e, d'être disposée entre deux feuilles transparentes 70, par exemple des films de matière plastique transparente assemblés pour former une pochette de protection, ou en variante laminés sur les faces externes de la structure.

Dans une variante, la structure comporte, comme illustré à la figure 10, une première couche de support 10 réalisée en polymère thermosoudable, par exemple en polypropylène.

Cette première couche de support définit deux volets 5 et 6 reliés entre eux par une ligne de pliage 14 réalisée dans l'exemple décrit par rainurage. Le premier volet 5 comporte une puce 11 avec une première antenne embarquée sur son circuit intégré (encore appelée « puce AOB »), par exemple une puce de la société Hitachi, ainsi qu'une seconde antenne 12 de couplage pour augmenter la distance de lecture de cette puce, cette antenne étant déposée par ultra-sons autour de la puce 11 sur le support de couche 10.

La structure peut comporter encore, avant assemblage, une couche de surface 25 de même nature que la couche de support 10.

Le deuxième volet 6 comporte dans cet exemple un élément de perturbation électromagnétique 13 réalisé sous forme d'une grille imprimée avec une encre conductrice, cette grille étant positionnée sur une partie du volet 6 du support de couche 10 de façon à laisser libre les bords externes pour leur assemblage ultérieur avec la couche 25, par lamination.

Après assemblage des couches de support 10 et de surface 25 à chaud et sous pression, l'élément de perturbation électromagnétique 13 et le dispositif RFID sans contact 11 avec son antenne de couplage 12 sont pris à l'intérieur de la structure. Lors de la lamination, l'élément de perturbation, le dispositif RFID et l'antenne se retrouvent noyés dans le polypropylène des supports de couche et de surface. La structure ainsi obtenue est plane et coplanaire au niveau des deux volets 5 et 6.

L'invention n'est pas limitée aux exemples de réalisation qui viennent d'être décrits

L'E-document est par exemple une carte d'identité, un titre de transport, un titre d'abonnement ou un document de contrôle d'accès.

On peut combiner entre elles des caractéristiques des différents modes de réalisation décrits au sein de variantes non illustrées.

L'expression « comportant un » doit être comprise comme étant synonyme de « comportant au moins un », sauf si le contraire est spécifié.

## Revendications

1. Structure laminée (8) pour E-document (1), comportant une première couche de support (10) définissant au moins deux volets plans (5, 6) de même épaisseur reliés par au moins une ligne de pliage (14) :
- le premier volet (5) portant une antenne (12) et un dispositif à microcircuit (11) permettant d'échanger des données sans contact,
- le deuxième volet (6) portant un élément de perturbation électromagnétique (13), comprenant notamment un matériau magnétique, un matériau conducteur ou un circuit résonateur, et étant disposé par rapport au dispositif a microcircuit de façon à pouvoir s'opposer à une lecture et/ou écriture sans contact du dispositif a microcircuit dans au moins une configuration pliée de la structure (8),
a) la structure (8) comportant au moins une couche d'un adhésif activable à chaud (20, 21, 22 ; 26 ; 33) ou sensible a la pression permettant d'accueillir dans son épaisseur au moins partiellement le dispositif à microcircuit et/ou l'antenne et/ou l'élément de perturbation électromagnétique,
et
b) les volets présentant au moins une couche d'un adhésif et/ou une couche fibreuse (15, 16) et/ou une couche polymère ayant une épaisseur différente pour chacun des volets,
la première couche de support (10) comportant au moins une cavité (18), notamment une cavité traversante, dans laquelle est logé au moins partiellement le dispositif a microcircuit (11).

2. Structure selon la revendication 1, la première couche de
support (10) étant de type fibreux ou polymère et/ou la structure comportant une deuxième (16) et une troisième couche (15) de support, respectivement portées par le premier volet (5) et par le deuxième volet (6), les deuxième et troisième couches ayant des épaisseurs différentes pour chacun des volets.

3. Structure selon la revendication précédente, la deuxième couche de support (16) comportant une cavité (17) dans laquelle est logé au moins partiellement le dispositif à microcircuit (11), ladite cavité (17) étant traversante.

4. Structure selon la revendication 2 ou 3, la troisième couche de support (15) comportant une cavité dans laquelle est logé l'élément de perturbation électromagnétique (13), et/ou la structure comportant deux couches d'adhésif (21, 22) respectivement portées par le premier volet (5) et par le deuxième volet (6), les deux couches d'adhésif ayant des épaisseurs différentes.

5. Structure selon l'une quelconque des revendications précédentes, la couche d'adhésif (21) portée par le premier volet (5) comportant une cavité dans laquelle est logée au moins partiellement le dispositif a microcircuit, où le deuxième volet (6) comportant deux couches d'adhésif (22, 23) entre lesquelles est disposé l'élément de perturbation électromagnétique (13).

6. Structure selon l'une quelconque des revendications 2 à 5, la deuxième couche de support (16) ne s'étendant qu'en partie sur le premier volet (5) et la troisième couche de support (15) ne s'étendant qu'en partie sur le deuxième volet (6), de façon à ménager une réserve d'épaisseur au niveau de la ligne de pliage (14), et/ou la structure comportant au moins une couche d'un adhésif activable à chaud (20, 21, 22) ou sensible à la pression entre la première couche de support (10) et la deuxième couche de support (16) et/ou entre la première couche de support (10) et la troisième couche de support (15), et/ou , les deuxième (16) et troisième (15) couches de support étant de type fibreux ou polymère.

7. Structure selon l'une quelconque des revendications 1 a 2 comportant une couche de surface (25), notamment en polymère, s'étendant sur le premier (5) et le deuxième (6) volet.

8. Structure selon la revendication précédente, comportant au moins une couche d'un adhésif activable à chaud ou sensible à la pression (26) située entre la première couche de support (10) et la couche de surface (26) et permettant d'accueillir dans son épaisseur au moins partiellement le dispositif a microcircuit intégré (11) et/ou l'antenne (12) et/ou l'élément de perturbation électromagnétique (13).

9. Structure selon l'une quelconque des revendications 1 à 2, la première couche de support (10) définissant un troisième volet (30) relié au premier volet (5) ou au deuxième volet (6) par une ligne de pliage (14 ; 31).

10. Structure selon la revendication précédente, comportant une couche de surface (32) s'étendant sur les premier, deuxième et troisième volets et comportant au moins une couche d'un adhésif activable à chaud ou sensible à la pression (33) située entre la première couche de support (10) et la couche de surface (32) et permettant d'accueillir dans son épaisseur au moins partiellement le dispositif a microcircuit intégré (11) et/ou l'antenne (12) et/ou l'élément de perturbation électromagnétique (13), la couche d'adhésif (33) s'étendant sur les premier (5), deuxième (6) et troisième (30) volets continûment sur la couche de surface (32).

11. Structure selon l'une des revendications 9 ou 10, l'élément de perturbation électromagnétique (13) comportant deux parties d'élément de perturbation (13a, 13b) respectivement portées par le deuxième et le troisième volet, les deux parties d'élément de perturbation (13a, 13b) s'étendant continûment par-delà la ligne de pliage (14, 31) ou les deux parties d'élément de perturbation (13a, 13b) étant distinctes.

12. Structure selon l'une quelconque des revendications 1 à 8, comportant deux volets (5, 6) et étant destinée à être fixée entre la couverture (2) et la page de garde (7) d'un E-document (1) se présentant sous la forme d'un livret.

13. Structure selon l'une quelconque des revendications 1 à 11, l'élément de perturbation électromagnétique (13) s'étendant sur une partie seulement de l'étendue de la structure (8) ou sur l'étendue de la structure (8).

14. Structure selon la revendication 1, les premier (5) et deuxième (6) volets étant coplanaires.

## Patentansprüche

1. Laminierte Struktur (8) für E-Dokument (1), aufweisend eine erste Trägerschicht (10), die wenigstens zwei flächige Klappen (5, 6) gleicher Dicke definiert, die durch wenigstens eine Faltlinie (14) verbunden sind:
- die erste Klappe (5), die eine Antenne (12) und eine Vorrichtung mit Mikroschaltkreis (11) für den kontaktlosen Austausch von Daten trägt,
- die zweite Klappe (6), die ein elektromagnetisches Störungselement (13) trägt und insbesondere ein magnetisches Material, ein leitendes Material oder eine Resonatorschaltung umfasst und relativ zu der Vorrichtung mit Mikroschaltkreis so angeordnet ist, dass sie sich einem kontaktlosen Lesen und/oder Schreiben der Vorrichtung mit Mikroschaltkreis in wenigstens einem gefalteten Zustand der Struktur (8) widersetzt,
a) wobei die Struktur (8) wenigstens eine Schicht aus einem heißaktivierbaren Klebstoff (20, 21, 22; 26; 33) oder druckempfindlichen Klebstoff aufweist, die gestattet, in ihrer Dicke die Vorrichtung mit Mikroschaltkreis und/oder die Antenne und/oder das elektromagnetische Störungselement wenigstens teilweise aufzunehmen,
und
b) wobei die Klappen wenigstens eine Schicht aus einem Klebstoff und/oder eine fasrige Schicht (15, 16) und/oder eine Polymerschicht mit einer Dicke, die für jede der Klappen unterschiedlich ist, aufweisen,
wobei die erste Trägerschicht (10) wenigstens eine Vertiefung (18), insbesondere eine durchgehende Vertiefung, aufweist, in der die Vorrichtung mit Mikroschaltkreis (11) wenigstens teilweise aufgenommen ist.

2. Struktur nach Anspruch 1, wobei die erste Trägerschicht (10) des fasrigen oder des polymeren Typs ist, und/oder wobei die Struktur eine zweite Trägerschicht (16) und eine dritte Trägerschicht (15) aufweist, die von der ersten Klappe (5) bzw. von der zweiten Klappe (6) getragen werden, wobei die zweite und die dritte Schicht Dicken aufweisen, die für jede der Klappen unterschiedlich sind.

3. Struktur nach dem vorhergehenden Anspruch wobei die zweite Trägerschicht (16) eine Vertiefung (17) aufweist, in der die Vorrichtung mit Mikroschaltkreis (11) wenigstens teilweise aufgenommen ist, wobei die Vertiefung (17) durchgehend ist.

4. Struktur nach Anspruch 2 oder 3, wobei die dritte Trägerschicht (15) eine Vertiefung aufweist, in der das elektromagnetische Störungselement (13) aufgenommen ist, und/oder wobei die Struktur zwei Schichten aus Klebstoff (21, 22) aufweist, die von der ersten Klappe (5) bzw. von der zweiten Klappe (6) getragen werden, wobei die zwei Schichten aus Klebstoff unterschiedliche Dicken aufweisen.

5. Struktur nach einem der vorhergehenden Ansprüche, wobei die Schicht aus Klebstoff (21), die von der ersten Klappe (5) getragen wird, eine Vertiefung aufweist, in der die Vorrichtung mit Mikroschaltkreis wenigstens teilweise aufgenommen ist, wobei die zweite Klappe (6) zwei Schichten aus Klebstoff (22, 23) aufweist, zwischen denen das elektromagnetische Störungselement (13) angeordnet ist.

6. Struktur nach einem der Ansprüche 2 bis 5, wobei sich die zweite Trägerschicht (16) nur zum Teil auf der ersten Klappe (5) erstreckt, und wobei sich die dritte Trägerschicht (15) nur zum Teil auf der zweiten Klappe (6) erstreckt, so dass im Bereich der Faltlinie (14) eine Reservedicke gebildet wird, und/oder wobei die Struktur wenigstens eine Schicht aus einem heißaktivierbaren Klebstoff (20, 21, 22) oder druckempfindlichen Klebstoff zwischen der ersten Trägerschicht (10) und der zweiten Trägerschicht (16) und/oder zwischen der ersten Trägerschicht (10) und der dritten Trägerschicht (15) aufweist, und/oder wobei die zweite Trägerschicht (16) und die dritte Trägerschicht (15) des fasrigen oder des polymeren Typs sind.

7. Struktur nach einem der Ansprüche 1 bis 2, aufweisend eine Oberflächenschicht (25), insbesondere aus Polymer, die sich auf der ersten Klappe (5) und der zweiten Klappe (6) erstreckt.

8. Struktur nach dem vorhergehenden Anspruch, aufweisend wenigstens eine Schicht aus einem heißaktivierbaren Klebstoff oder druckempfindlichen Klebstoff (26), die sich zwischen der ersten Trägerschicht (10) und der Oberflächenschicht (25) befindet und die gestattet, in ihrer Dicke die Vorrichtung mit integriertem Mikroschaltkreis (11) und/oder die Antenne (12) und/oder das elektromagnetische Störungselement (13) wenigstens teilweise aufzunehmen.

9. Struktur nach einem der Ansprüche 1 bis 2, wobei die erste Trägerschicht (10) eine dritte Klappe (30) definiert, die mit der ersten Klappe (5) oder mit der zweiten Klappe (6) durch eine Faltlinie (14; 31) verbunden ist.

10. Struktur nach dem vorhergehenden Anspruch, aufweisend eine Oberflächenschicht (32), die sich auf der ersten, zweiten und dritten Klappe erstreckt und aufweisend wenigstens eine Schicht aus einem heißaktivierbaren Klebstoff oder druckempfindlichen Klebstoff (33), die sich zwischen der ersten Trägerschicht (10) und der Oberflächenschicht (32) befindet und die gestattet, in ihrer Dicke die Vorrichtung mit integriertem Mikroschaltkreis (11) und/oder die Antenne (12) und/oder das elektromagnetische Störungselement (13) wenigstens teilweise aufzunehmen, wobei die Schicht aus Klebstoff (33) sich auf der ersten Klappe (5), zweiten Klappe (6) und dritten Klappe (30) über die Oberflächenschicht (32) durchgängig erstrecken.

11. Struktur nach einem der Ansprüche 9 oder 10, wobei das elektromagnetische Störungselement (13) zwei Störungselementteile (13a, 13b) aufweist, die von der zweiten bzw. der dritten Klappe getragen werden, wobei die zwei Störungselementteile (13a, 13b) sich durchgängig jenseits der Faltlinie (14, 31) erstrecken, oder wobei die zwei Störungselementteile (13a, 13b) verschieden sind.

12. Struktur nach einem der Ansprüche 1 bis 8, aufweisend zwei Klappen (5, 6) und dazu bestimmt, zwischen dem Deckblatt (2) und dem Titelblatt (7) eines E-Dokuments (1) befestigt zu werden, das die Form eines Büchleins aufweist.

13. Struktur nach einem der Ansprüche 1 bis 11, wobei das elektromagnetische Störungselement (13) sich nur über einen Teil der Flächenausdehnung der Struktur (8) oder über die Flächenausdehnung der Struktur (8) erstreckt.

14. Struktur nach Anspruch 1, wobei die erste Klappe (5) und die zweite Klappe (6) koplanar sind.

## Claims

1. Laminated structure (8) for E-document (1), comprising a first support layer (10) defining at least two flaps (5, 6) of the same thickness connected by at least one fold line (14):
- the first flap (5) supporting an antenna (12) and a microcircuit device (11) enabling contactless data exchange,
- the second flap (6) supporting an electromagnetic interference element (13), notably comprising a magnetic material, a conductive material, or a resonator circuit, and being arranged in relation to the microcircuit device so as to be able to oppose at least one of contactless reading and/or writing of the microcircuit device in at least one folded configuration of the structure (8),
a) the structure (8) comprising at least one heat-activated adhesive (20, 21, 22 ; 26 ; 33) or pressure-sensitive layer making it possible to receive the microcircuit device and/or the antenna and/or the electromagnetic interference element at least in part in its thickness, and
b) the flaps comprising at least an adhesive and/or fibrous and/or polymer layer (15, 16) having different thicknesses for each of the flaps,
the first support layer (10) comprising at least one cavity (18), notably a through cavity, in which the microcircuit device (11) is at least partially housed.

2. Structure according to any one of the preceding claims, wherein the first support layer (10) being of the fibrous or polymer type and/or the structure comprises a second (16) and a third (15) support layer, supported by the first flap (5) and the second flap (6), respectively, the second and third layers having different thicknesses for each of the flaps.

3. Structure according to the preceding claims, wherein the second support layer (16) comprises a cavity (17) in which the microcircuit device (11) is at least partially housed, said cavity being a through cavity.

4. Structure according to claims 2 or 3, wherein the third support layer (15) comprising a cavity in which the electromagnetic interference element (13) is housed, and/or the structure comprising two adhesive layers (21, 22) supported by the first flap (5) and the second flap (6), respectively, the two adhesive layer having different thicknesses.

5. Structure according to any one of the preceding claims, wherein the adhesive layer (21) supported by the first flap (5) comprises a cavity in which the microcircuit device is at least partially housed, wherein the second flap (6) comprises two adhesive layers (22, 23) between which the electromagnetic interference element (13) is housed.

6. Structure according to any one of claims 2 to 5, the second support layer (16) only partially extending on the first flap (5) and the third support layer (15) only partially extending over the second flap (6), so as to arrange a thickness reserve at the fold line (14), and/or the structure comprising at least a heat-activated adhesive (20, 21, 22) or heat-activated layer between the first support layer (10) and the second support layer (16) and/or between the first support layer (10) and the third support layer (15), and/or the second (16) and third (15) support layer being of the fibrous or polymer type.

7. Structure according to anyone of claims 1 to 2, comprising a surface layer (25), notably in polymer, extending on the first (5) and second (6) flaps.

8. Structure according to the preceding claim, comprising at least one layer of a heat-activated or pressure-sensitive adhesive (26) between the first support layer (10) and the surface layer (26) making it possible to receive at least in part in its thickness the microcircuit device (11) and/or the antenna (12) and/or the electromagnetic interference element (13).

9. Structure according to anyone of claims 1 to 2, the first support layer (10) defining a third flap (30) connected to the first flap (5) or the second flap (6) by a fold line (14 ; 31).

10. Structure according to the preceding claims, comprising a surface layer (32) extending over the first, second and third layers and comprising at least one heat-activated or pressure-sensitive (33) adhesive layer located between the first support layer (10) and the surface layer (32) and making it possible to receive the microcircuit device (11) and/or the antenna (12) and/or the electromagnetic interference element (13) at least partially in its thickness, the adhesive layer (33) extending over the first (5), second (6) and third (30) flaps continuously over the surface layer (32).

11. Structure according to any one of claims 9 or 10, the electromagnetic interference element (13) comprising two interference element portions (13a, 13b) supported by the second and third flaps, respectively, the two interference element portions (13a, 13b) extending continously beyond the fold line (14, 31) or the two interference element portions (13a, 13b) being distinct.

12. Structure according to any one of claims 1 to 8, comprising two flaps (5, 6) and being destined to be fixed between the cover (2) and the cover page (7) of an E-document (1) presenting itself as a booklet.

13. Structure according to any one of claims 1 to 11, the electromagnetic interference element (13) extending over only one portion of the scope of the structure (8) or over the scope of the structure (8).

14. Structure according to claim 1, the first (5) and second (6) flaps being coplanar.
